# EUROPÄISCHE PATENTANMELDUNG

(11) **EP 4 822 171 A1**
(43) Veröffentlichungstag der Anmeldung: **14.10.2026**
(21) Anmeldenummer: 25169655.5
(22) Anmeldetag: 10.04.2025
(51) Int. Cl.: F03D 13/10, F03D 13/20

(54) **MONTAGEVERFAHREN ZUR MONTAGE MEHRERER AUFBLASBARER SCRUTON-WENDELN AN EINER TURMSEKTION, DEMONTAGEVERFAHREN ZUR DEMONTAGE MEHRERER AN EINEM TURM ANGEORDNETER, AUFGEBLASENER SCRUTON-WENDELN, SCRUTON-WENDEL UND AUFBLASBARE SCRUTON-WENDELVORRICHTUNG, TURMSEKTION, TURM UND WINDENERGIEANLAGE**

(71) Anmelder: Wobben Properties GmbH, 26607 Aurich (DE)
(72) Erfinder: Berlinghoff, Marius Theodor, 26725 Emden (DE); Pollmann, Andreas, 26607 Aurich (DE); Kruse, Heinz, 26607 Aurich (DE)
(74) Vertreter: Eisenführ Speiser

(57) **Zusammenfassung**

Verfahren zur Montage mehrerer aufblasbarer Scruton-Wendeln (1, 1', 1", 1‴) an einer Turmsektion (2) für einen Turm (102), insbesondere an einer Turmsektion (2) für einen Turm (102) für eine Windenergieanlage (100), wobei sich die Turmsektion (2) entlang einer Längsachse (L) zwischen einem oberen Turmsektionsende (2a) und einem von dem oberen Turmsektionsende (2a) verschiedenen unteren Turmsektionsende (2b) erstreckt und die mehreren Scruton-Wendeln (1, 1', 1", 1‴) sich jeweils zwischen einem oberen Wendelende und einem unteren Wendelende erstrecken und jeweils mehrere miteinander verbundene oder verbindbare, aufblasbare Störkörper (10) aufweisen, das Verfahren umfassend die Schritte: Befestigen eines oberen Befestigungsgurtes an dem oberen Turmsektionsende (2a) oder im Bereich des oberen Turmsektionsendes, so dass der obere Befestigungsgurt (3) die Turmsektion (2) quer zur Längsachse (L) in Umfangsrichtung umschließt, Befestigen eines unteren Befestigungsgurtes an dem unteren Turmsektionsende (2b) oder im Bereich des unteren Turmsektionsendes, so dass der untere Befestigungsgurt (4) die Turmsektion (2) quer zur Längsachse (L) in Umfangsrichtung umschließt, Befestigen der mehreren aufblasbaren Scruton-Wendeln (1, 1', 1", 1‴) an dem oberen Befestigungsgurt (3) und dem unteren Befestigungsgurt, so dass die mehreren Scruton-Wendeln (1, 1', 1", 1‴) die Turmsektion (2) spiralförmig umschließen, wobei die Störkörper der mehreren Scruton-Wendeln (1, 1', 1", 1‴) nicht aufgeblasen sind.

## Beschreibung

Die Erfindung betrifft ein Montageverfahren zur Montage mehrerer aufblasbarer Scruton-Wendeln an einer Turmsektion für einen Turm für eine Windenergieanlage. Ferner betrifft die Erfindung ein Demontageverfahren zur Demontage mehrerer an einem Turm angeordneter, aufgeblasener Scruton-Wendeln.

Weiterhin betrifft die Erfindung eine aufblasbare Scruton-Wendel zur spiralförmigen Montage an einer Turmsektion für einen Turm sowie eine Scruton-Wendelvorrichtung. Ferner betrifft die Erfindung eine Turmsektion, einen Turm und eine Windenergieanlage.

Scruton-Wendeln werden eingesetzt, um wind induzierte Schwingungen an schlanken Strukturen zu reduzieren. Diese Schwingungen entstehen durch aerodynamische Effekte wie Wirbelablösung oder Querwind-Schwingungen und können langfristig zu Schäden oder sogar zum Versagen der Struktur führen.

Eine Scruton-Wendel ist eine aerodynamische Vorrichtung, die verwendet wird, um Schwingungen in Bauwerken oder technischen Strukturen zu dämpfen. Scruton-Wendeln erhöhen also die aerodynamische Dämpfung und verhindern so gefährliche Resonanzeffekte. Dies ist besonders bei Bauwerken mit geringer struktureller Dämpfung effektiv. Solche Bauwerke sind beispielsweise Antennen, Schornsteine, Brückenpylonen oder Türme. Durch die Reduzierung dieser Schwingungen verlängern Scruton-Wendeln die Lebensdauer von Bauwerken mit ansonsten geringer struktureller Dämpfung.

Der Trend hin zu immer filigraneren Bauwerkkonstruktionen, wie dies etwa bei Türmen für Windenergieanlagen der Fall ist, führt dazu, dass diese Bauwerke bei der Montage zunehmend anfälliger sind für ein oszillierendes Aufschwingen bei kritischen Windgeschwindigkeiten. Somit nimmt das Stabilitätsrisiko solcher Bauwerke zu, und ebenso steigt das Verletzungsrisiko für Monteure bei Montagearbeiten im und an dem (zu montierenden) Turm. Insofern ist ein Aufschwingen im jeden Fall zu verhindern. Wenn die Windgeschwindigkeiten eine kritische Windgeschwindigkeit erreichen, werden Montagearbeiten im und an dem Turm unterbrochen. Dies gewährleistet zwar zumindest die Sicherheit der Monteure, das Stabilitätsrisiko wird durch diese Maßnahme allerdings nicht reduziert. Hinzu führt diese Maßnahme zur Verzögerung der Montage und somit ggf. auch zur Verzögerung der Inbetriebnahme des Bauwerks, was in der Regel mit erheblichen wirtschaftlichen Nachteilen einhergeht.

Dieses Problem des Aufschwingens kann unterbunden oder zumindest minimiert werden, indem laminare Strömungen an solchen Bauwerken gestört werden.

Es sind beispielsweise Lösungen bekannt, bei denen Scruton-Wendeln fest mit einem Bauwerk mit geringer struktureller Dämpfung über dessen gesamte Lebensdauer mit dem Bauwerk verbunden sind. Für manche dieser Bauwerke kann es aber aus verschiedenen Gründen nicht in Betracht kommen, dass die Scruton-Wendel über die gesamte Lebensdauer mit dem Bauwerk verbunden sind. Dies kommt beispielsweise bei Windenergieanlagen in Betracht. Hier ist es in der Regel gewünscht, dass die Türme von Windenergieanlagen für den regulären Betrieb der Windenergieanlage keine Scruton-Wendeln aufweisen. Nach Fertigstellung der Windenergieanlage ist diese in aller Regel nicht mehr anfällig für kritische windinduzierte Schwingungen. Diese kritischen Schwingungen und somit der Bedarf an der Anordnung von Scruton-Wendeln an dem Turm entstehen bzw. bestehen insbesondere nur während des Aufbaus des Turmes. Für die fertige Windenergieanlage sind jedoch keine Scruton-Wendeln erforderlich, so dass von einer permanenten Anordnung von Scruton-Wendeln abgesehen werden kann.

Es sind aber auch Scruton-Wendeln bekannt, die nach einer Turmmontage wieder gelöst werden können. So betrifft EP 3 604 801 A1 eine Vorrichtung zum Schutz von Windturbinentürmen gegen windinduzierte Schwingungen und Vibrationen, die insbesondere im spiralförmig angebrachten Zustand auch als Scruton-Spirale bezeichnet wird. Die Vorrichtung ist ein Windbrecher zum Reduzieren von windinduzierten Vibrationen oder Schwingungen beim Transport oder Aufstellen eines Turms oder Turmsegments von Windturbinen, aufweisend eine Unterkonstruktion, die gegen eine Oberfläche eines Turms oder Turmsegments spannbar ist und eine Auflageseite mit einer Auflagefläche zum Aufliegen auf der Oberfläche des Turms oder Turmsegments und eine der Auflageseite gegenüberliegende Außenseite aufweist, und zumindest ein Windwiderstandselement, zum Beeinflussen einer Windströmung an dem Turm oder Turmsegment, wobei das Windwiderstandselement mit der Außenseite der Unterkonstruktion in Kontakt bringbar ist und mit der Unterkonstruktion verbindbar ist.

Diese bekannte Lösung kann unter Umständen in einer Ausführungsform den Nachteil aufweisen, dass sich eine nur vergleichsweise geringe Dämpfung erzielen lässt, wenn sich der Windbrecher vergleichsweise gut an die Turmaußenseite anlegt. In einer anderen Ausführungsform kann nach der Erkenntnis der Erfinder wohl eine bessere Dämpfung erreicht werden, aufgrund eines tunnelförmigen Hohlkörpers dürfte der Windbrecher jedoch weniger optimal an der Turmaußenseite anliegen. Hinzu kommt, dass die Windbrecher über Metallösen miteinander verbunden werden, die nach der Erkenntnis der Erfinder im an den Turm angelegten Zustand an der Turmaußenseite anliegen, so dass die Metallösen die Turmaußenseite insbesondere bei der Demontage beschädigen können. Schließlich ist nach der Erkenntnis der Erfinder die Montage vergleichsweise aufwändig. Hinzu kommt nach der Erkenntnis der Erfinder, dass es aufwändig sein dürfte, die Windbrecher derart fest um den Turm zu wickeln, dass diese während dem Einsatz nicht verrutschen.

Insofern liegt der Erfindung die Aufgabe zugrunde, eine Lösung bereitzustellen, welche die genannten Nachteile überwindet, zumindest aber minimiert. Insbesondere liegt der Erfindung die Aufgabe zugrunde, eine Lösung bereitzustellen, welche einerseits eine einfache Montage und Demontage von Scruton-Wendeln an Turmsektionen von Türmen ermöglicht und andererseits die Scruton-Wendel zuverlässig an der Turmsektion anliegt.

Gemäß einem ersten Aspekt der Erfindung wird die eingangs genannte Aufgabe durch ein Montageverfahren nach Anspruch 1 gelöst. Das Montageverfahren ist ein Montageverfahren zur Montage mehrerer aufblasbarer Scruton-Wendeln an einer Turmsektion für einen Turm. Insbesondere ist das Montageverfahren ist ein Montageverfahren zur Montage mehrerer aufblasbarer Scruton-Wendeln an einer Turmsektion für einen Turm für eine Windenergieanlage.

Die Turmsektion erstreckt sich entlang einer Längsachse zwischen einem oberen Turmsektionsende und einem von dem oberen Turmsektionsende verschiedenen unteren Turmsektionsende. Die Turmsektion kann sich zwischen dem oberen Turmsektionsende und dem unteren Turmsektionsende mit einer Turmsektionslänge von beispielsweise mindestens 5 m, 10 m, 15 m, 20 m, 25 m oder 30 m erstrecken. Vorzugsweise erstreckt sich die Turmsektion zwischen dem oberen Turmsektionsende und dem unteren Turmsektionsende mit einer Turmsektionslänge von beispielsweise maximal 10 m, 15 m, 20 m, 25 m, 30 m, 35 m oder 40 m. Selbstverständlich können die Turmsektionen auch Turmsektionslängen aufweisen, die kleiner als 20 m sind oder größer als 40 m sind. Insbesondere können die Turmsektionen eine Turmsektionslänge von 11,5 m aufweisen.

Die Turmsektion kann üblicherweise Durchmesser von bis zu 4 m betragen. Selbstverständlich sind auch Turmsektionen mit Durchmessern von mehr als 4 m denkbar.

In der Regel umfasst ein Turm im Betriebszustand mehrere aufeinander angeordnete und miteinander befestigte Turmsektionen. Entsprechend ist ein oberes Turmsektionsende einer Turmsektion mit einem unteren Turmsektionsende einer weiteren Turmsektion verbunden. Eine Turmsektion der mehreren Turmsektionen ist mit einem Fundament des Turmes verbunden.

Im Betriebszustand erstreckt sich die Längsachse der Turmsektion im Wesentlichen in vertikaler Richtung. Während des Transportes und bevor die Turmsektion zu einem Turm verbaut werden, etwa, wenn sie (zwischen)gelagert werden, erstreckt sich die Längsachse in der Regel nicht in vertikaler Richtung. Insbesondere kann sich die Turmsektion während des Transportes oder während der Lagerung im Wesentlichen horizontal erstrecken.

Angaben wie "obere" und "untere" beziehen sich auf eine Anordnung der Turmsektion im Betriebszustand der Turmsektion. Insofern sind Angaben zu "obere" und "untere" dahingehend zu verstehen, dass ein oberes Turmsektionsende in vertikaler Richtung oberhalb eines unteren Turmsektionsendes angeordnet ist. Dies gilt, mutatis mutandis, für die Befestigungsgurte, aufblasbaren Scruton-Wendeln, usw. Es ist insoweit zu verstehen, dass bei einer auf dem Boden gelagerten Turmsektion das obere Turmsektionsende und untere Turmsektionsende auf derselben oder ähnlichen Höhe angeordnet sein können. Dies gilt, mutatis mutandis, für die Befestigungsgurte, aufblasbaren Scruton-Wendeln, usw.

Der Turm und/oder die Turmsektion ist insbesondere ein zylindrisches und/oder konisches Bauteil.

Die mehreren Scruton-Wendeln erstrecken sich jeweils zwischen einem oberen Wendelende und einem unteren Wendelende und weisen jeweils mehrere miteinander verbundene oder verbindbare, aufblasbare Störkörper auf. Vorzugsweise erstrecken sich die mehreren Scruton-Wendeln spiralförmig um die Turmsektion. Vorzugsweise erstrecken sich die mehreren Scruton-Wendeln parallel zueinander. Vorzugsweise erstrecken sich die mehreren Scruton-Wendeln mit mindestens einer Windung um die Turmsektion. Es kann ferner bevorzugt sein, dass sich die mehreren Scruton-Wendeln mit 1,25 Windungen, 1,5 Windungen, 1,75 Windungen, 2 Windungen oder mehr um die Turmsektion erstrecken. Es kann ferner bevorzugt sein, dass sich die mehreren Scruton-Wendeln mit weniger als 1,25 Windungen um die Turmsektion erstrecken.

Vorzugsweise erstreckt sich die Scruton-Wendel mit einer Steigung um die Turmsektion. Insbesondere bemisst sich die Steigung einer Scruton-Wendel analog zu einer Steigung eines Gewindes. Vorzugsweise beträgt die Steigung der mehreren Scruton-Wendeln mindestens 1, 2, 3, 4, 5 oder mehr. Ergänzend oder alternativ beträgt die Steigung maximal 1, 2, 3, 4, 5 oder mehr. Beispielsweise ergibt sich bei einer Steigung von 5 und einem Turmdurchmesser von 4 m eine Länge von 20 m (=5*4 m). Entsprechend wird eine Turmsektion mit einer Turmsektionslänge von 20 m genau einmal von dieser Scruton-Wendel umrundet. Entsprechend würde eine Turmsektion mit einer Turmsektionslänge von 40 m zweimal von der Scruton-Wendel umrundet werden und bei einer Turmsektionslänge von 30 m eineinhalbmal.

Vorzugsweise werden drei Scruton-Wendeln je Turmsektion montiert.

Vorzugsweise werden die mehreren Scruton-Wendeln in Umfangsrichtung der Turmsektion beabstandet zueinander angeordnet. Vorzugsweise sind die mehreren Scruton-Wendeln in Umfangsrichtung äquidistant zueinander beabstandet angeordnet. Beispielsweise sind bei Turmsektionen, an denen zwei Scruton-Wendeln angeordnet sind, die Scruton-Wendeln vorzugsweise um 180° angeordnet. Beispielsweise sind bei Turmsektionen, an denen drei Scruton-Wendeln angeordnet sind, die Scruton-Wendeln vorzugsweise um 120° angeordnet. Beispielsweise sind bei Turmsektionen, an denen vier Scruton-Wendeln angeordnet sind, die Scruton-Wendeln vorzugsweise um 90° angeordnet.

Die aufblasbaren Störkörper erstrecken sich jeweils zwischen einem ersten Störkörperende und einem von dem ersten Störkörperende verschiedenen zweiten Störkörperende mit einer Störkörperlänge.

Eine Scruton-Wendel kann beispielsweise zwei aufblasbare Störkörper derselben Störkörperlänge und einen aufblasbaren Störkörper mit einer im Vergleich zu den beiden anderen aufblasbaren Störkörpern geringere Störkörperlänge aufweisen. Es könnten etwa zwei aufblasbare Störkörper einer Scruton-Wendel eine Störkörperlänge von 12,5 m aufweisen und ein dritter aufblasbarer Störkörper eine Störkörperlänge von 5 m aufweisen. Ebenso kann eine Scruton-Wendel beispielsweise zwei aufblasbare Störkörper derselben Störkörperlänge und zwei weitere aufblasbare Störkörper mit einer im Vergleich zu den beiden anderen aufblasbaren Störkörpern geringeren Störkörperlänge aufweisen. So könnten zwei aufblasbare Störkörper einer Scruton-Wendel eine Störkörperlänge von 12,5 m aufweisen und zwei weitere aufblasbare Störkörper der Scruton-Wendel eine Störkörperlänge von 5 m aufweisen.

Die Durchmesser der aufblasbaren Störkörper könnten im aufgeblasenen Zustand beispielsweise bis zu 300 mm betragen. Selbstverständlich sind auch davon abweichende Durchmesser denkbar.

Die aufblasbaren Störkörper können über entsprechende Verbindungsvorrichtungen miteinander verbunden sein. Vorzugsweise ist ein aufblasbarer Störkörper über ein erstes Störkörperende mit einem zweiten Störkörperende eines weiteren aufblasbaren Störkörpers über entsprechende Verbindungsvorrichtungen verbunden. Die Verbindungsvorrichtungen sind vorzugsweise Verbindungslaschen oder eine Kombination von Verbindungslaschen. Vorzugsweise ist ein Störkörper der aufblasbaren Störkörper mit einem ersten Störkörperende und ein anderer Störkörper der aufblasbaren Störkörper mit einem zweiten Störkörperende mit einem oberen und/oder unteren Befestigungsgurt verbunden.

Es ist insbesondre vorgesehen, dass die aufblasbaren Störkörper über Laschen und Schäkel, insbesondere Softschäkel verbunden werden oder sind. Insbesondere ist es vorgesehen, dass die aufblasbaren Störkörper über ein Paar Laschen verbunden werden oder sind. Insbesondere ist es bevorzugt, dass eine der beiden Laschen des Paars kürzer ist als die andere der beiden Laschen des Paars. Vorzugsweise wird die Scruton-Wendel derart an dem oberen und unteren Befestigungsgurt befestigt, dass die kürzere Lasche der beiden Laschen des Paars der Außenseite des Turmsektionsendes zugewandt ist und die längere Lasche der beiden Laschen des Paars von der der Außenseite des Turmsektionsendes abgewandt ist. Insbesondere ist es bevorzugt, dass der Abstand zwischen der Außenseite des Turmsektionsendes und der kürzeren Lasche der beiden Laschen des Paars geringer ist als der Abstand zwischen der Außenseite des Turmsektionsendes und der längeren Lasche der beiden Laschen des Paars. Somit ist in den Verbindungspunkten zwischen den aufblasbaren Störkörpern die Orientierung vorgegeben. Dadurch wird im aufgeblasenen Zustand ein Drehen/ Rollen der aufblasbaren Störkörper am Turm bzw. an der Turmsektion und somit ebenfalls ein Verdrehen der aufblasbaren Störkörper zueinander reduziert. Dies ist insbesondere wichtig, um die Positionsstabilität der Scruton-Wendeln zu optimieren und mögliche pneumatische Verbindungsschläuche, welche die aufblasbaren Störkörper pneumatisch miteinander verbinden, nicht übermäßig zu verdrehen.

Die aufblasbaren Störkörper sind schlauchförmige und/oder ballonartige Körper. Die aufblasbaren Störkörper umfassen einen Störkörperhohlraum mit einem veränderbaren Störkörperhohlraumvolumen. Die aufblasbaren Störkörper weisen in einem Leerzustand, in dem die aufblasbaren Störkörper nicht mit Luft oder einem anderen Gas(gemisch) aufgeblasen sind, als Störkörperhohlraumvolumen ein Leerzustandsvolumen auf, und in einem aufgeblasenen Zustand, in dem die aufblasbaren Störkörper mit Luft oder einem anderen Gas(gemisch) aufgeblasen sind, als Störkörperhohlraumvolumen ein Füllvolumen auf, welches größer ist als das Leerzustandsvolumen.

Die aufblasbaren Störkörper bestehen vorzugsweise aus einem faserverstärkten Kunststofftextil oder werden vorzugsweise aus einem faserverstärkten Kunststofftextil ausgebildet.

Die aufblasbaren Störkörper können Ventile aufweisen, über die den aufblasbaren Störkörpern Luft oder ein anderes Gas(gemisch) zugeführt werden kann. Über dieselben Ventile oder auch andere Öffnungen können die aufblasbaren Störkörper entleert werden.

Das Verfahren umfasst die Schritte Befestigen eines oberen Befestigungsgurtes an dem oberen Turmsektionsende oder im Bereich des oberen Turmsektionsendes, so dass der obere Befestigungsgurt die Turmsektion quer zur Längsachse in Umfangsrichtung umschließt, Befestigen eines unteren Befestigungsgurtes an dem unteren Turmsektionsende oder im Bereich des unteren Turmsektionsendes, so dass der untere Befestigungsgurt die Turmsektion quer zur Längsachse in Umfangsrichtung umschließt, und Befestigen der mehreren aufblasbaren Scruton-Wendeln an dem oberen Befestigungsgurt und dem unteren Befestigungsgurt, so dass das jeweilige obere Wendelende mit dem oberen Befestigungsgurt verbunden ist und das jeweilige untere Wendelende mit dem unteren Befestigungsgurt verbunden ist, so dass die mehreren Scruton-Wendeln die Turmsektion spiralförmig umschließen, wobei die aufblasbaren Störkörper der mehreren Scruton-Wendeln nicht aufgeblasen sind.

Indem die aufblasbaren Störkörper beim Befestigen der mehreren aufblasbaren Scruton-Wendeln an dem oberen Befestigungsgurt und dem unteren Befestigungsgurt nicht aufgeblasen sind, ist die Montage einfach und schnell möglich. Insbesondere lassen sich die aufblasbaren Scruton-Wendeln leicht an der Turmsektion ausrichten, so dass sie, wenn sie anschließend, nach der Befestigung an den Befestigungsgurten, aufgeblasen werden definiert und straff, mit einer gewissen Vorspannung an der Turmsektion anliegen. Durch die resultierende Vorspannung erhält die Scruton-Wendel im Zusammenspiel mit den beiden Befestigungsgurten eine zusätzliche Stabilität. Ferner reduziert dies das Risiko, dass die Scruton-Wendeln nach der Montage an der Turmsektion verrutschen.

Die Schritte des Befestigens des oberen Befestigungsgurtes, des Befestigens des unteren Befestigungsgurtes und des Befestigens der mehreren aufblasbaren Scruton-Wendeln erfolgen vorzugsweise an einer auf dem Boden liegenden Turmsektion. Dies ermöglicht eine einfache, aufwandsarme und sichere Befestigung des oberen und unteren Befestigungsgurtes sowie der mehreren Scruton-Wendeln. Insbesondere ist hierdurch während des Befestigens des oberen und unteren Befestigungsgurtes sowie der mehreren Scruton-Wendeln kein Kran oder dergleichen erforderlich, der die Turmsektion in einer Position hält, in der die Turmsektion nicht auf dem Boden aufliegt oder nur teilweise auf dem Boden aufliegt.

Der Bereich des oberen Turmsektionsendes umfasst vorzugsweise einen Bereich, der sich ausgehend von dem oberen Turmsektionsende entlang der Längsachse bis zur Mitte zwischen dem oberen und unteren Turmsektionsende erstreckt. Insbesondere umfasst der Bereich des oberen Turmsektionsendes vorzugsweise einen Bereich, der sich ausgehend von dem oberen Turmsektionsende entlang der Längsachse in Richtung des unteren Turmsektionsendes um maximal 2 m, bevorzugt um maximal 1 m, insbesondere bevorzugt um maximal 0,5 m erstreckt.

Der Bereich des unteren Turmsektionsendes umfasst vorzugsweise einen Bereich, der sich ausgehend von dem unteren Turmsektionsende entlang der Längsachse bis zur Mitte zwischen dem oberen und unteren Turmsektionsende erstreckt. Insbesondere umfasst der Bereich des unteren Turmsektionsendes vorzugsweise einen Bereich, der sich ausgehend von dem unteren Turmsektionsende entlang der Längsachse in Richtung des oberen Turmsektionsendes um maximal 2 m, bevorzugt um maximal 1 m, insbesondere bevorzugt um maximal 0,5 m erstreckt.

Die Gurtlänge des oberen und/oder des unteren Befestigungsgurtes orientiert sich an dem Durchmesser der Turmsektion. Vorzugsweise weisen der obere und/oder der untere Befestigungsgurt eine Befestigungsgurtlänge von bis zu 15 m auf und eine Befestigungsgurtbreite von bis zu 50 mm auf.

Der obere Befestigungsgurt und/oder der untere Befestigungsgurt sind vorzugsweise ein Spanngurt oder umfassen einen Spanngurt.

Der obere Befestigungsgurt und/oder der untere Befestigungsgurt umfassen einen Öffnungs- und/oder Schließmechanismus. Insbesondere werden der obere Befestigungsgurt und/oder der untere Befestigungsgurt durch den Schließmechanismus an der Turmsektion befestigt. Vorzugsweise werden der obere Befestigungsgurt und/oder der untere Befestigungsgurt durch den Öffnungsmechanismus von der Turmsektion gelöst. Es kann bevorzugt sein, dass der Schließmechanismus und der Öffnungsmechanismus derselbe Mechanismus sind.

Der obere und/oder untere Befestigungsgurt umfassen vorzugsweise einen Gurt an dem mehrere Befestigungselemente, zum Beispiel Befestigungslaschen oder Befestigungsschlaufen vorgesehen sind, an denen die mehreren Scruton-Wendeln befestigt werden. Insbesondere wird über den oberen und unteren Befestigungsgurt die jeweilige Scruton-Wendel an der Turmsektion in Position gehalten. Insbesondere kann es bevorzugt sein, dass der obere und/oder untere Befestigungsgurt im Bereich der Befestigungselemente sogenannte Antirutschmanschetten aufweist, welche die Haftreibung zwischen der Außenseite der Turmsektion und dem oberen und/oder unteren Befestigungsgurt erhöhen.

Vorzugsweise entspricht die Anzahl der Befestigungselemente der Anzahl der zu befestigenden Scruton-Wendeln. Vorzugsweise weist der Gurt mehr Befestigungselemente auf als Scruton-Wendeln vorgesehen sind. Die mehreren Befestigungselemente sind vorzugsweise beabstandet, insbesondere äquidistant beabstandet, an dem Gurt angeordnet. Es ist insofern bei dem Schritt Befestigen der mehreren aufblasbaren Scruton-Wendeln an dem oberen Befestigungsgurt und dem unteren Befestigungsgurt vorgesehen, dass die mehreren aufblasbaren Scruton-Wendeln jeweils mit einem Befestigungselement des oberen und unteren Befestigungsgurts verbunden werden. Dies ermöglicht eine schnelle, einfache und sichere Verbindung zwischen den Scruton-Wendeln und den beiden Befestigungsgurten. Hinzu kommt, dass durch die beabstandete Anordnung der Befestigungselemente der Abstand zwischen den mehreren Scruton-Wendeln schnell und einfach in definierter Weise vorgegeben werden kann.

Insbesondere ist es vorgesehen, dass der obere und untere Befestigungsgurt baugleich sind. Insbesondere ist es bevorzugt, dass der obere und untere Befestigungsgurt beim Schritt des Befestigens des oberen und unteren Befestigungsgurtes entsprechend der erforderlichen Windungsanzahl gegeneinander verdreht angeordnet werden. Beispielsweise werden der obere und untere Befestigungsgurt bei einer Windungsanzahl von 1,5 um 180° verdreht zueinander angeordnet. Hierdurch kann in bevorzugter Weise die Steigung der Scruton-Wendeln eingestellt werden. Ergänzend wird hierdurch in bevorzugter Weise sichergestellt, dass der Öffnungs- und/oder Schließmechanismus des oberen und/oder unteren Befestigungsgurtes stets zwischen denselben Scruton-Wendeln liegt. Dies ist besonders bevorzugt, um eine leichte Demontage der Scruton-Wendeln von der Turmsektion bzw. dem Turm zu ermöglichen.

Es ist insbesondere vorgesehen, dass der obere und/oder untere Befestigungsgurt entsprechend der Anzahl der Scruton-Wendeln Befestigungselemente umfassen.

Ferner ist es bevorzugt, dass der obere und/oder untere Befestigungsgurt eine Spannvorrichtung aufweisen, so dass bei den Schritten Befestigen des oberen und unteren Befestigungsgurtes die beiden Befestigungsgurte besonders fest an der Turmsektion befestigt werden können, sodass ein Verrutschen der an der Turmsektion montierten Scruton-Wendeln verhindert wird. Dies hat den Vorteil, dass keine nachträglichen Korrekturarbeiten erforderlich sind, die ggf. sogar erneut einen Kran erfordern oder aber spezielle trainierte Industriekletterer, um die jeweiligen Befestigungsgurte sowie die Scruton-Wendeln im Nachhinein zu justieren. Ferner wird durch die Möglichkeit, die Befestigungsgurte durch die Spannvorrichtung besonders eng an die Turmsektion anzulegen, die Gefahr eines Herabrutschens der Scruton-Wendeln, was zu Beschädigungen an der Turmsektion bzw. dem Turm und ggf. zu Personenschaden führen kann, minimiert.

Vorzugsweise können der obere Befestigungsgurt und/oder der untere Befestigungsgurt durch eine Schnappverbindung gelöst werden. Insbesondere weist der Gurt des oberen und/oder unteren Befestigungsgurtes eine Schnappverbindung auf. Als Schnappverbindung kommt beispielsweise ein Schnappschäkel in Betracht. Die Schnappverbindung kann beispielsweise durch ein entsprechendes Betätigungsseil ausgelöst werden. Entsprechend kann durch Betätigung der Schnappverbindung, beispielsweise durch das Betätigungsseil, der jeweilige Befestigungsgurt geöffnet werden. Dies ist insbesondere für die Demontage der Scruton-Wendel von einer Turmsektion eines errichteten Turms hilfreich, da die Demontage über die Betätigungsseile vom Boden erfolgen kann, also keine Kräne oder sonstigen teuren Hilfsmittel für die Demontage der Scruton-Wendeln erforderlich sind. Insofern kann das Betätigungsseil durchaus eine Seillänge von bis zu 150 m oder mehr aufweisen.

Es ist insbesondere bevorzugt, dass beim Befestigen der mehreren aufblasbaren Scruton-Wendeln die Scruton-Wendeln durch entsprechende Haltegurte mit dem oberen und unteren Befestigungsgurt verbunden werden. Hierzu werden die Haltegurte vorzugsweise durch die Laschen der Scruton-Wendeln gezogen und mit den Befestigungselementen verbunden. Insbesondere ist es bevorzugt, dass die Haltegurte in der Länge variabel einstellbar sind. Beispielsweise können die Haltgurte entsprechende Spannvorrichtungen, beispielsweise Ratschen aufweisen, mit denen die Verbindung zwischen den Scruton-Wendeln und dem oberen und unteren Befestigungsgurt bei Bedarf auch nachgespannt werden kann, um die Scruton-Wendeln möglichst eng um die Turmsektion legen zu können.

Die Erfindung wird vorliegend in Bezug auf ein Montageverfahren zur Montage mehrerer aufblasbarer Scruton-Wendeln an einer Turmsektion beschrieben. Es ist zu verstehen, dass das Montageverfahren zur Montage mehrerer aufblasbarer Scruton-Wendeln an einer Turmsektion auf ein Montageverfahren zur Montage mehrerer aufblasbarer Scruton-Wendeln an einem Turm mit mehreren Turmsektionen übertragen werden kann. Es kann bevorzugt sein, dass je Turmsektion ein oberer und unterer Befestigungsgurt, wie zuvor in Bezug auf eine Turmsektion beschrieben worden ist, befestigt werden und je Turmsektionen entsprechend Scruton-Wendeln angeordnet werden. Alternativ kann es bei einem Turm mit übereinander angeordneten Turmsektionen bevorzugt sein, dass die einer ersten Turmsektion zugeordneten Scruton-Wendeln mit ihrem oberen Ende an einem oberen Befestigungsgurt befestigt sind, an dem die unteren Enden der einer zweiten, auf der ersten Turmsektion angeordneten Turmsektion zugeordneten Scruton-Wendeln befestigt sind.

Dieser Aspekt weist Merkmale bzw. Verfahrensschritte auf, die sie insbesondere dafür geeignet machen, mit einer nachstehend beschriebenen Vorrichtung und nachstehend beschriebenen Demontageverfahren gemäß den weiteren Aspekten und ihren Fortbildungen verwendet zu werden. Zu den weiteren Vorteilen, Ausführungsvarianten und Ausführungsdetails dieses ersten Aspekts der Erfindung und ihrer Fortbildungen wird auch auf die nachfolgende Beschreibung zu den entsprechenden Merkmalen der weiteren Aspekte verwiesen.

Gemäß einer bevorzugten Fortbildung umfasst das Montageverfahren als Schritt ein Aufblasen der aufblasbaren Störkörper der mehreren Scruton-Wendeln. Der Schritt des Aufblasens erfolgt insbesondere nachdem die mehreren Scruton-Wendeln an dem oberen und unteren Befestigungsgurt befestigt worden sind. Dies hat den Vorteil, dass sich die Scruton-Wendeln im Zusammenspiel mit den beiden Befestigungsgurten an der Turmsektion festklemmen. Hierdurch halten die Scruton-Wendeln besser an der Turmsektion, so dass das Risiko eines Verrutschens sinkt, was wiederum die Gefahr von Beschädigungen an der Turmsektion oder von Personenschäden durch ein vollständiges herunterrutschen der Scruton-Wendel minimiert. Denn indem sich die Scruton-Wendeln durch das sich der Befestigung anschließende Aufblasen an die Turmsektion klemmen, müssen der obere und/oder untere Befestigungsgurt nicht mehr die vollständige Last der Scruton-Wendeln tragen.

Ergänzend oder alternativ umfasst das Montageverfahren nach einer bevorzugten Fortbildung als Schritt ein Anheben der Turmsektion aus einer Montageposition und Positionieren der Turmsektion in einer Betriebsposition.

Die Montageposition kann die Position der Turmsektion auf dem Boden oder in speziellen Aufnahmestützen für die Turmsektion am Boden oder auf einem Fahrzeug, beispielsweise einem Lastkraftfahrzeug sein. In der Montageposition erstreckt sich die Längsachse der Turmsektion vorzugsweise im Wesentlichen horizontal oder ist im Wesentlichen lediglich minimal gegenüber einer horizontalen Ebene geneigt. Insofern befinden sich das obere und untere Turmsektionsende in der Montageposition im Wesentlichen auf derselben oder einer ähnlichen Höhe, d.h. in der Montageposition ist das obere Turmsektionsende nicht zwingend in vertikaler Richtung oberhalb des unteren Turmsektionsendes angeordnet.

Die Betriebsposition ist die Position, welche die Turmsektion im Betriebszustand, insbesondere im Betriebszustand einer Windenergieanlage aufweist. In der Betriebsposition ist die Turmsektion insbesondere derart ausgerichtet, dass sich die Längsachse der Turmsektion im Wesentlichen in vertikaler Richtung erstreckt. In der Betriebsposition kann die Turmsektion auf einem Fundament des Turms angeordnet sein bzw. mit dem Fundament befestigt sein, d.h. ein unteres Turmsektionsende ist in diesem Fall mit dem Fundament verbunden. Ferner kann in der Betriebsposition die Turmsektion auf einer anderen Turmsektion des Turms angeordnet sein bzw. zwischen zwei anderen Turmsektionen angeordnet sein. Insofern ist das untere Turmsektionsende einer Turmsektion mit einem oberen Turmsektionsende einer im Betriebszustand unterhalb dieser Turmsektion angeordneten ersten weiteren Turmsektion verbunden und das obere Turmsektionsende der Turmsektion mit einem unteren Turmsektionsende einer im Betriebszustand oberhalb dieser Turmsektion angeordneten zweiten weiteren Turmsektion verbunden.

Das Anheben der Turmsektion aus der Montageposition und das Positionieren der Turmsektion in der Betriebsposition erfolgt vorzugsweise mit einem Kran. Der Schritt des Anhebens der Turmsektion aus der Montageposition erfolgt insbesondere nach dem Schritt des Positionierens der Turmsektion in der Betriebsposition.

Vorzugsweise erfolgt der Schritt des Anhebens der Turmsektion nach dem Schritt des Aufblasens der aufblasbaren Störkörper der mehreren Scruton-Wendeln. Dies hat den Vorteil, dass der Schritt des Aufblasens bodennah erfolgen kann. Ferner hat dies den Vorteil, dass die Scruton-Wendeln in Bodennähe erforderlichenfalls justiert werden können, wenn es beim Aufblasen durch die resultierenden Spannkräfte zu einem Verrutschen der Scruton-Wendeln und/oder der Befestigungsgurte kommt. Dies hat ferner den Vorteil, dass die Scruton-Wendel an der Turmsektion festklemmt, bevor sie durch das Eigengewicht entlang der Längsachse der Turmsektion nach unten verrutschen kann.

Es kann alternativ bevorzugt sein, dass der Schritt des Aufblasens der aufblasbaren Störkörper der mehreren Scruton-Wendeln nach dem Schritt des Anhebens der Turmsektion, insbesondere nach dem Schritt des Positionierens der Turmsektion in der Betriebsposition, erfolgt. Dies hat den Vorteil, dass die Scruton-Wendel sich durch das Eigengewicht entlang der Längsachse der Turmsektion gleichmäßig ausrichten kann.

Gemäß einer weiteren bevorzugten Ausführungsform umfasst das Montageverfahren ein Befestigen der Turmsektion in der Betriebsposition. Das Befestigen der Turmsektion in der Betriebsposition ist insbesondere ein Befestigen der Turmsektion an einem Fundament oder an einer weiteren Turmsektion, die im Betriebszustand unterhalb der zu befestigenden Turmsektion angeordnet ist. Insbesondere umfasst das Befestigen der Turmsektion in der Betriebsposition ein Befestigen des unteren Turmsektionsendes an dem Fundament oder an einem oberen Turmsektionsende der weiteren Turmsektion, die im Betriebszustand unterhalb der zu befestigenden Turmsektion angeordnet ist. Der Schritt des Befestigens der Turmsektion in der Betriebsposition erfolgt nach dem Schritt des Positionierens der Turmsektion in der Betriebsposition.

Nach einer weiteren bevorzugten Fortbildung umfasst das Montageverfahren ein Verbinden eines Demontagegehänges mit den mehreren Scruton-Wendeln, insbesondere mit dem jeweiligen oberen Wendelende der mehreren Scruton-Wendeln.

Das Demontagegehänge kann beispielsweise einen Scruton-Wendel-Verbindungsgurt, der über Schäkel mit den Scruton-Wendeln verbindbar ist, und einen Hebegurt, der mit dem Scruton-Wendel-Verbindungsgurt verbunden ist, umfassen. Das Verbinden des Demontagegehänges mit den mehreren Scruton-Wendeln umfasst insbesondere ein Verbinden des Scruton-Wendel-Verbindungsgurtes mit den Scruton-Wendeln, insbesondere mit den oberen Wendelenden der jeweiligen Scruton-Wendel.

Ferner kann es bevorzugt sein, den Hebegurt an dem oberen Turmsektionsende oder im Bereich des oberen Turmsektionsendes zu fixieren. Insbesondere kann der Hebegurt im Inneren des Turmsektionsendes fixiert sein. Hierzu wird der Hebegurt vorzugsweise über das obere Turmsektionsende in das Innere der Turmsektion geführt. Insofern kann das Demontagegehänge auch als Absturzsicherung dienen, falls sich versehentlich der obere und/oder untere Befestigungsgurt öffnen.

Gemäß einem zweiten Aspekt der Erfindung wird die eingangs genannte Aufgabe durch ein Demontageverfahren nach Anspruch 5 gelöst. Das Demontageverfahren ist ein Demontageverfahren zur Demontage mehrerer an einer Turmsektion für einen Turm spiralförmig angeordneter, aufgeblasener Scruton-Wendeln. Insbesondere ist das Demontageverfahren ein Demontageverfahren zur Demontage mehrerer an einer Turmsektion für einen Turm für eine Windenergieanlage spiralförmig angeordneter, aufgeblasener Scruton-Wendeln. Beispielsweise wurden die mehreren Scruton-Wendeln nach dem Montageverfahren gemäß dem ersten Aspekt montiert.

Die Turmsektion erstreckt sich entlang einer Längsachse zwischen einem oberen Turmsektionsende und einem von dem oberen Turmsektionsende verschiedenen unteren Turmsektionsende und an dem oberen Turmsektionsende oder im Bereich des oberen Turmsektionsendes ist ein oberer Befestigungsgurt angeordnet, der die Turmsektion quer zur Längsachse in Umfangsrichtung umschließt, und an dem unteren Turmsektionsende oder im Bereich des unteren Turmsektionsendes ist ein unterer Befestigungsgurt angeordnet, der die Turmsektion quer zur Längsachse in Umfangsrichtung umschließt, wobei die mehreren Scruton-Wendeln sich jeweils zwischen einem oberen Wendelende und einem unteren Wendelende erstrecken und jeweils mehrere miteinander verbundene oder verbindbare, aufblasbare Störkörper aufweisen, wobei die mehreren Scruton-Wendeln an dem oberen Befestigungsgurt jeweils mit dem oberen Wendelende verbunden sind und an dem unteren Befestigungsgurt jeweils mit dem unteren Wendelende verbunden sind, wobei der obere Befestigungsgurt die Scruton-Wendeln an dem oberen Turmsektionsende oder im Bereich des oberen Turmsektionsendes befestigt und der untere Befestigungsgurt die Scruton-Wendeln an dem unteren Turmsektionsende oder im Bereich des unteren Turmsektionsendes befestigt.

Bezüglich möglicher Ausgestaltungen der Turmsektion, des oberen und unteren Befestigungsgurtes sowie der mehreren Scruton-Wendeln wird ergänzend auf die Beschreibung zum ersten Aspekt der Erfindung verwiesen.

Das Demontageverfahren gemäß dem zweiten Aspekt umfasst als Schritte ein Lösen der Befestigung der mehreren aufgeblasenen Scruton-Wendeln von dem unteren Turmsektionsende oder von der Turmsektion im Bereich des unteren Turmsektionsendes, ein Abwickeln, insbesondere selbstständiges Abwickeln, der mehreren aufgeblasenen Scruton-Wendeln von der Turmsektion, und nach dem Abwickeln ein Lösen der Befestigung der mehreren Scruton-Wendeln von dem oberen Turmsektionsende oder von der Turmsektion im Bereich des oberen Turmsektionsendes. Indem die Scruton-Wendeln im aufgeblasenen Zustand in einem ersten Schritt zunächst von dem unteren Turmsektionsende gelöst werden, führt dies dazu, dass sich die Scruton-Wendeln durch die im montierten Zustand der Scruton-Wendeln anliegende Vorspannkraft "eigenständig" abwickeln. Insofern kommt es bei dem erfindungsgemäßen Demontageverfahren nach der Erkenntnis der Erfinder darauf an, dass die Scruton-Wendeln im aufgeblasenen Zustand zunächst von dem unteren Turmsektionsende gelöst werden, so dass sich die Scruton-Wendeln selbstständig von der Turmsektion abwickeln. Somit führt das Lösen der Befestigung der mehreren aufgeblasenen Scruton-Wendeln von dem unteren Turmsektionsende dazu, dass die Scruton-Wendeln ihre spiralförmige Anordnung an der Turmsektion verlieren und sich abwickeln, so dass sie im Wesentlich von dem oberen Befestigungsgurt gerade, d.h. vertikal, seitlich von der Turmsektion herabhängen. Durch das anschließende Lösen der Befestigung der mehreren Scruton-Wendeln von dem oberen Turmsektionsende, kann sie von der Turmsektion entfernt werden.

Gemäß einer bevorzugten Fortbildung des Demontageverfahrens ist vorgesehen, dass der Schritt des Lösens der Befestigung der mehreren Scruton-Wendeln von dem unteren Turmsektionsende ein Lösen des unteren Befestigungsgurtes von dem unteren Turmsektionsende der Turmsektion umfasst. Ergänzend oder alternativ ist es vorgesehen, dass der Schritt des Lösens der Befestigung der mehreren Scruton-Wendeln von dem oberen Turmsektionsende ein Lösen des oberen Befestigungsgurtes von dem oberen Turmsektionsende der Turmsektion umfasst.

Für den Schritt des Lösens des unteren und/oder oberen Befestigungsgurtes können der obere Befestigungsgurt und/oder der untere Befestigungsgurt durch eine Schnappverbindung gelöst werden, insbesondere durch die Betätigung eines Betätigungsseils, das mit der Schnappverbindung verbunden ist. Entsprechend kann die Schnappverbindung, wie diese in Bezug auf den ersten Aspekt beschrieben worden ist, ausgebildet sein. Dies hat den Vorteil, dass die Demontage der Scruton-Wendeln vom Boden aus erfolgen kann. Insoweit sind in bevorzugter Weise Kräne oder andere aufwändige Hilfsmittel für die Demontage der Scruton-Wendeln lediglich erforderlich, um diese nach dem Schritt des Lösens zu Boden zu lassen. Beispielsweise können die Scruton-Wendeln dann mit Hilfe einer Gondelwindel oder einem Kran abgelassen werden.

Weiterhin umfasst das Demontageverfahren gemäß einer bevorzugten Fortbildung als Schritt ein Entleeren der aufgeblasenen Störkörper der mehreren Scruton-Wendeln. Beim Entleeren wird Luft oder ein anderes Gas(gemisch) aus den aufgeblasenen Störkörpern entfernt, so sich das Störkörperhohlraumvolumen von dem Füllvolumen hin zu dem Leerzustandsvolumen verkleinert.

Vorzugsweise erfolgt der Schritt des Entleerens der aufgeblasenen Störkörper der mehreren Scruton-Wendeln vor dem Lösen der Befestigung der mehreren Scruton-Wendeln von dem oberen Turmsektionsende oder von der Turmsektion im Bereich des oberen Turmsektionsendes. Dies hat den Vorteil, dass die Scruton-Wendeln nach dem Lösen der Befestigung der Scruton-Wendeln von der Turmsektion kompakt am Boden im Bereich des Fundaments zusammenfalten.

Insbesondere ist es bevorzugt, dass der Schritt des Entleerens der aufgeblasenen Störkörper der mehreren Scruton-Wendeln nach dem Lösen der Befestigung der mehreren Scruton-Wendeln von dem oberen Turmsektionsende oder von der Turmsektion im Bereich des oberen Turmsektionsendes erfolgt. Besonders bevorzugt ist es, dass der Schritt des Entleerens der aufgeblasenen Störkörper der mehreren Scruton-Wendeln erfolgt, wenn die Scruton-Wendeln auf den Boden abgelassen worden sind. Dies hat den Vorteil, dass die Gefahr von Beschädigungen des Turms oder von Personen durch die Scruton-Wendeln wegen der aufgeblasenen Störkörper geringer ist.

Ferner kann gemäß einer bevorzugten Fortbildung vorgesehen sein, dass das Demontageverfahren als weitere Schritte ein Befestigen eines Kranes an einem Demontagegehänge umfasst. Hierdurch wird sichergestellt, dass die Scruton-Wendeln nach dem Lösen der der Befestigung der mehreren Scruton-Wendeln von der Turmsektion nicht unkontrolliert zu Boden fallen. Vorzugsweise erfolgt der Schritt des Befestigens des Kranes an dem Demontagegehänge vor dem Lösen der Befestigung der mehreren aufgeblasenen Scruton-Wendeln von dem unteren und/oder oberen Turmsektionsende oder von der Turmsektion im Bereich des unteren und/oder oberen Turmsektionsendes. Nach dem Schritt des Befestigens folgt als Schritt ein Ablegen der von der Turmsektion gelösten Scruton-Wendeln mit dem Kran. Dies hat den Vorteil, dass die Scruton-Wendeln besonders schonend und sicher, insbesondere mit einer reduzierten Gefahr für Sach- und Personenschäden herabgelassen werden können.

Die Erfindung wird vorliegend in Bezug auf ein Demontageverfahren zur Demontage mehrerer aufblasbarer Scruton-Wendeln von einer Turmsektion beschrieben. Es ist zu verstehen, dass das Demontageverfahren zur Demontage mehrerer aufblasbarer Scruton-Wendeln von einer Turmsektion auf ein Demontageverfahren zur Demontage mehrerer aufblasbarer Scruton-Wendeln von einem Turm mit mehreren Turmsektionen übertragen werden kann. Es kann bevorzugt sein, dass bei einem Turm mit mehreren Turmsektionen, an denen jeweils Scruton-Wendeln, wie zuvor beschrieben worden ist, montiert worden sind, die Demontage je Turmsektion, wie hierin beschrieben worden ist, erfolgt.

Sofern bei einem Turm mit übereinander angeordneten Turmsektionen die Montage der Scruton-Wendeln derart erfolgt ist, dass die einer ersten Turmsektion zugeordneten Scruton-Wendeln mit ihrem oberen Ende an einem oberen Befestigungsgurt befestigt sind, an dem die unteren Enden der einer zweiten, auf der ersten Turmsektion angeordneten Turmsektion zugeordneten Scruton-Wendeln befestigt sind, umfasst das Lösen der Befestigung der mehreren aufgeblasenen Scruton-Wendeln von dem unteren Turmsektionsende oder von der Turmsektion im Bereich des unteren Turmsektionsendes ein vollständiges Lösen der Scruton-Wendeln von dem Turm bis auf die Befestigung der Scruton-Wendeln am obersten Ende des Turms. Die Befestigung der Scruton-Wendeln am obersten Ende des Turms wird erst gelöst, nach dem sich die miteinander verbundenen Scruton-Wendeln vollständig abgewickelt haben.

Gemäß einem dritten Aspekt wird die eingangs genannte Aufgabe durch eine aufblasbare Scruton-Wendel nach Anspruch 8 gelöst. Die aufblasbare Scruton-Wendel ist eine aufblasbare Scruton-Wendel zur spiralförmigen Montage an einer Turmsektion für einen Turm. Insbesondere ist die aufblasbare Scruton-Wendel eine aufblasbare Scruton-Wendel zur spiralförmigen Montage an der Turmsektion für den Turm für eine Windenergieanlage. Die Scruton-Wendel umfasst mehrere miteinander verbundene, aufblasbare Störkörper.

Gemäß einem vierten Aspekt wird die eingangs genannte Aufgabe durch eine aufblasbare Scruton-Wendelvorrichtung nach Anspruch 9 gelöst. Die Scruton-Wendelvorrichtung umfasst mehrere zuvor beschriebene aufblasbare Scruton-Wendeln. Vorzugsweise umfasst die Scruton-Wendelvorrichtung genau drei oder mindestens drei zuvor beschriebene aufblasbare Scruton-Wendeln.

Gemäß einem fünften Aspekt wird die eingangs genannte Aufgabe durch eine Turmsektion nach Anspruch 10 gelöst. Die Turmsektion ist eine Turmsektion für einen Turm, insbesondere für einen Turm für eine Windenergieanlage, die sich entlang einer Längsachse zwischen einem oberen Turmsektionsende und einem von dem oberen Turmsektionsende verschiedenen unteren Turmsektionsende erstreckt, umfassend mindestens eine zuvor beschriebene Scruton-Wendel, die sich zwischen einem oberen Wendelende und einem unteren Wendelende spiralförmig zwischen dem oberen Turmsektionsende und dem unteren Turmsektionsende erstreckt.

Gemäß einer bevorzugten Fortbildung der Turmsektion ist vorgesehen, dass die mindestens eine Scruton-Wendel mit dem oberen Wendelende an dem oberen Turmsektionsende oder im Bereich des oberen Turmsektionsendes mit der Turmsektion verbunden ist, und/oder mit dem unteren Wendelende an dem unteren Turmsektionsende oder im Bereich des unteren Turmsektionsendes mit der Turmsektion verbunden ist.

Ferner umfasst die Turmsektion nach einer bevorzugten Ausführungsform an dem oberen Turmsektionsende oder im Bereich des oberen Turmsektionsendes einen oberen Befestigungsgurt, der die Turmsektion quer zur Längsachse in Umfangsrichtung umschließt, an dem die mindestens eine Scruton-Wendel mit dem oberen Wendelende verbunden ist, und/oder an dem unteren Turmsektionsende oder im Bereich des unteren Turmsektionsendes einen unteren Befestigungsgurt, der die Turmsektion quer zur Längsachse in Umfangsrichtung umschließt, an dem die mindestens eine Scruton-Wendel mit dem unteren Wendelende verbunden ist.

Nach einer weiteren bevorzugten Ausführungsform der Turmsektion ist vorgesehen, dass die aufblasbaren Störkörper aufgeblasen sind.

Gemäß einem sechsten Aspekt der Erfindung wird die eingangs genannte Aufgabe durch einen Turm nach Anspruch 14 gelöst. Der Turm ist insbesondere ein Turm für eine Windenergieanlage. Der Turm umfasst eine zuvor beschriebene Turmsektion.

Gemäß einem siebten Aspekt der Erfindung wird die eingangs genannte Aufgabe durch eine Windenergieanlage nach Anspruch 15 gelöst. Die Windenergieumlage umfasst eine zuvor beschriebene Turmsektion und/oder einen zuvor beschriebenen Turm.

Zu den Vorteilen, Ausführungsvarianten und Ausführungsdetails dieser weiteren Aspekte der Erfindung und ihrer Fortbildungen wird auch auf die vorangegangene Beschreibung zu den entsprechenden Merkmalen der jeweils anderen Aspekte, insbesondere des Montageverfahrens des ersten Aspekts verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1:: eine schematische, dreidimensionale Ansicht einer beispielhaften Ausführungsform einer Windenergieanlage;
- Fig. 2:: eine schematische, dreidimensionale Ansicht einer beispielhaften Ausführungsform eines Turms der in Figur 1 gezeigten Windenergieanlage;
- Fig. 3:: eine schematische, zweidimensionale Ansicht einer beispielhaften Ausführungsform einer Turmsektion des in Figur 2 gezeigten Turms mit drei Scruton-Wendeln;
- Fig. 4a,b:: zwei schematische Schnittansichten in der Draufsicht des in Figur 3 gezeigten Ausführungsbeispiels einer Turmsektion;
- Fig. 5:: eine schematische zweidimensionale Ansicht einer beispielhaften Ausführungsform einer Scruton-Wendel;
- Fig. 6:: eine schematische Ansicht eines Ausführungsbeispiels eines Demontagegehänges;
- Fig. 7:: ein schematisches Blockdiagramm eines Ausführungsbeispiels eines Montageverfahrens; und
- Fig. 8:: ein schematisches Blockdiagramm eines Ausführungsbeispiels eines Demontageverfahrens.

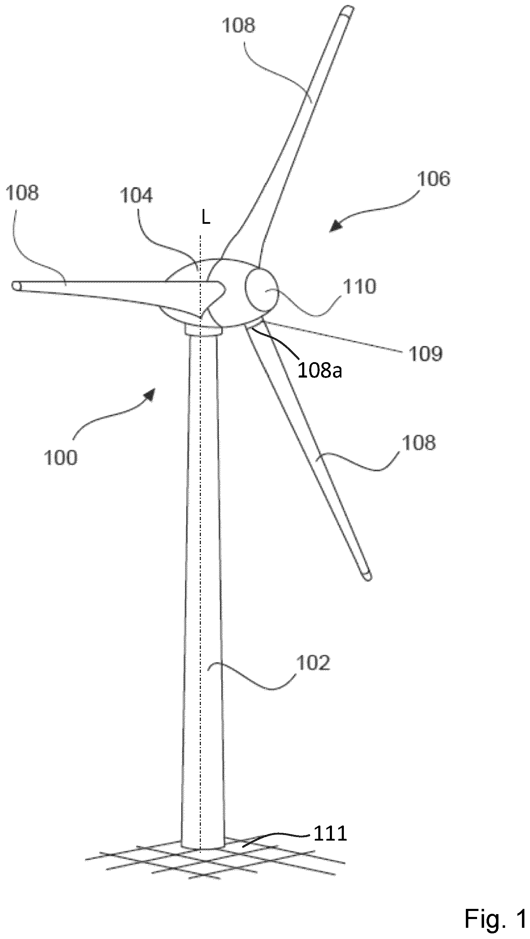

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein aerodynamischer Rotor 106 mit drei Rotorblättern 108 und einem Spinner 110 angeordnet. Der aerodynamische Rotor 106 wird im Betrieb durch den Wind in eine Drehbewegung versetzt und treibt dadurch einen Generator, insbesondere einen Rotor des Generators, an. Der Turm 102 der Windenergieanlage 100 erstreckt sich ausgehend von einem Fundament 111 entlang einer Längsachse L in Richtung der Gondel 104.

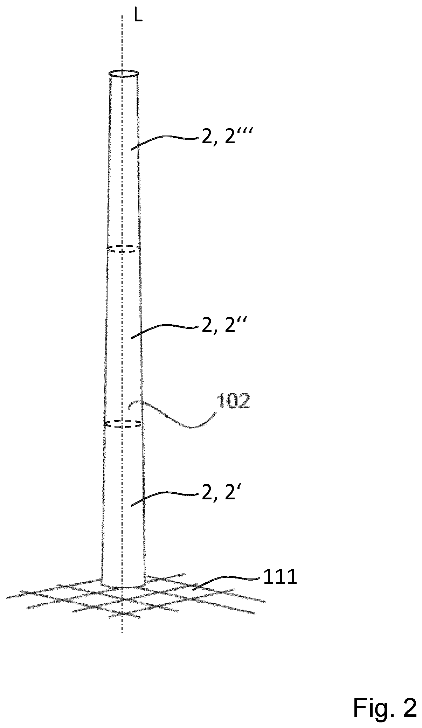

Figur 2 zeigt eine schematische dreidimensionale Ansicht einer beispielhaften Ausführungsform des Turms 102 der in Figur 1 gezeigten Windenergieanlage 100 im Betriebszustand, so dass sich der Turm 102 im Wesentlichen vertikal entlang der Längsachse L erstreckt. Der Turm 102 umfasst in diesem Ausführungsbeispiel drei Turmsektionen 2, 2', 2", 2"'. Die drei Turmsektionen 2, 2', 2", 2‴sind aufeinander angeordnet und miteinander befestigt (nicht dargestellt). So erstreckt sich eine erste Turmsektion 2' ausgehend von dem Fundament 111. Auf dieser Turmsektion 2' ist eine weitere, eine zweite Turmsektion 2" angeordnet, auf der wiederum eine dritte Turmsektion 2‴ angeordnet ist. Insofern ist die dritte Turmsektion 2‴ im Betriebszustand oberhalb der ersten und zweiten Turmsektion 2', 2" angeordnet und die zweite Turmsektion 2" ist im Betriebszustand oberhalb der ersten Turmsektion 2' angeordnet.

Jede der Turmsektionen erstreckt sich zwischen einem oberen Turmsektionsende 2a und einem unteren Turmsektionsende 2b, welches von dem oberen Turmsektionsende 2a verschieden ist. Insofern ist die erste Turmsektion 2' mit dem unteren Turmsektionsende 2b an dem Fundament befestigt und mit dem oberen Turmsektionsende 2a mit dem unteren Turmsektionsende 2b der zweiten Turmsektion 2" verbunden. Die zweite Turmsektion 2" ist mit dem oberen Turmsektionsende 2a wiederum mit dem unteren Turmsektionsende 2b der dritten Turmsektion 2‴ verbunden.

In dem in Figur 2 schematisch dargestellten Ausführungsbeispiel ist der Turm 102 leicht konisch. Es ist zu verstehen, dass der Turm stattdessen auch zylinderförmig ausgebildet sein könnte.

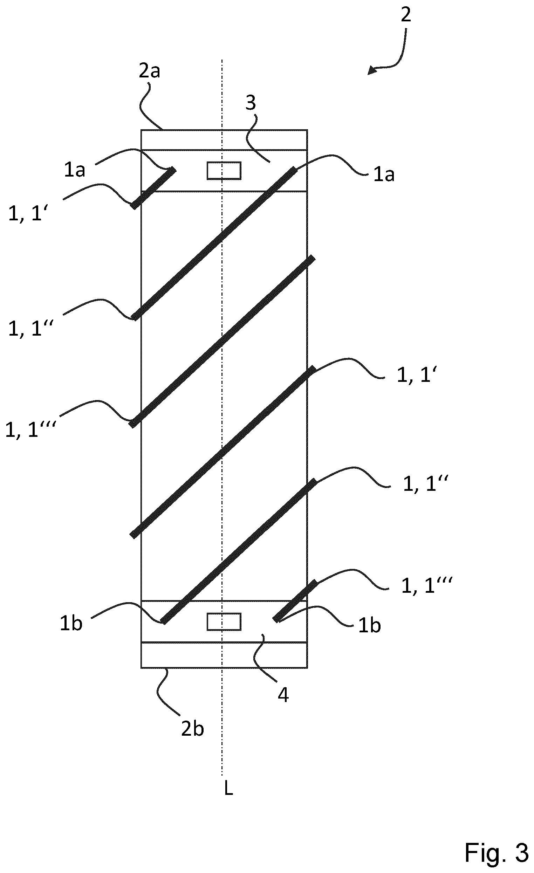

Figur 3 zeigt eine schematische, zweidimensionale Ansicht einer beispielhaften Ausführungsform einer Turmsektion 2 des in Figur 2 gezeigten Turms 102 mit drei Scruton-Wendeln 1, 1', 1", 1‴. Die drei Scruton-Wendeln 1, 1', 1", 1‴ sind im Bereich des oberen Turmsektionsendes 2a jeweils mit dem oberen Wendelende 1a an der Turmsektion 2 befestigt und im Bereich des unteren Turmsektionsendes 2b jeweils mit dem unteren Wendelende 1b an der Turmsektion 2 befestigt. Zur Befestigung der Scruton-Wendeln an der Turmsektion 2 ist im Bereich des oberen Turmsektionsendes 2a ein oberer Befestigungsgurt 3 befestigt und im Bereich des unteren Turmsektionsendes 2b ein unterer Befestigungsgurt 4 befestigt. Die drei Scruton-Wendeln sind hierbei derart angeordnet, dass sie die Turmsektion 2 spiralförmig mit etwa 1,3 Windungen umschließen.

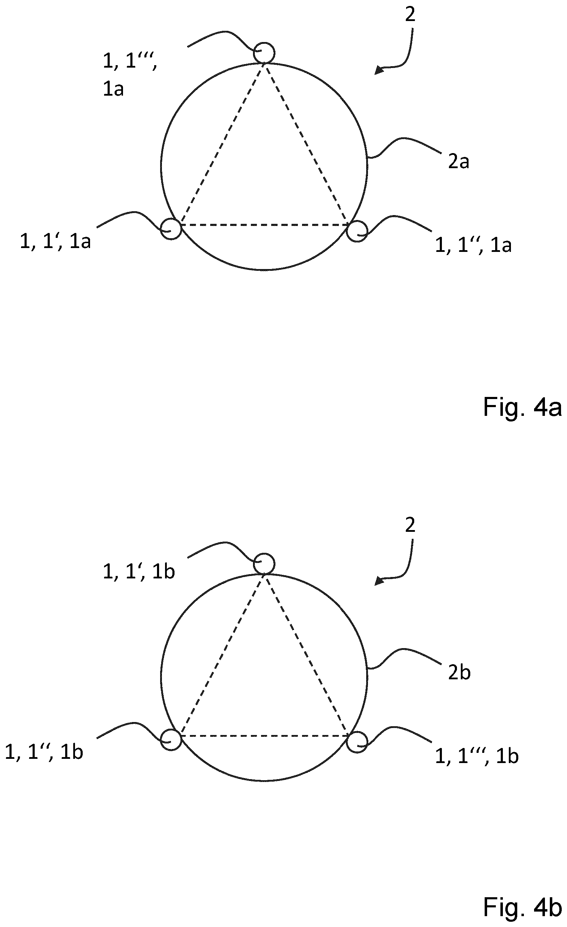

Die Figuren 4a,b zeigen zwei schematische Schnittansichten in der Draufsicht des in Figur 3 gezeigten Ausführungsbeispiels der Turmsektion 2. Die in Figur 4a gezeigte Schnittansicht zeigt den Schnitt im Bereich der oberen Wendelenden 1a bzw. im Bereich des oberen Turmsektionsendes 2a. Die in Figur 4b gezeigte Schnittansicht zeigt den Schnitt im Bereich der unteren Wendelenden 1b bzw. im Bereich des unteren Turmsektionsendes 2b.

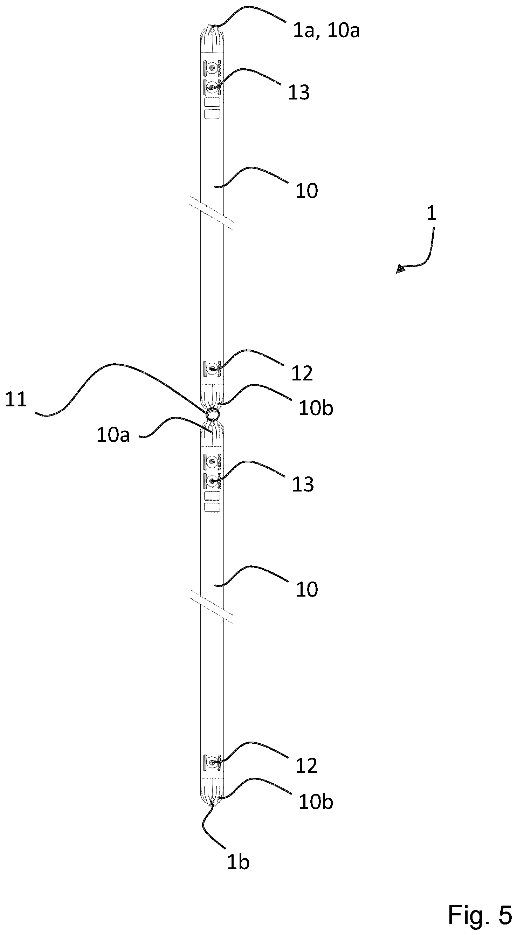

Figur 5 zeigt eine schematische zweidimensionale Ansicht einer beispielhaften Ausführungsform einer Scruton-Wendel 1, wie sie beispielsweise in dem in Figur 3 gezeigten Ausführungsbeispiel schematisch dargestellt ist. Die Scruton-Wendel 1 erstreckt sich zwischen einem oberen Wendelende 1a und einem unteren Wendelende 1b. Die Scruton-Wendel 1 weist in diesem Ausführungsbeispiel zwei miteinander verbundene, aufblasbare Störkörper 10 auf.

Die aufblasbaren Störkörper 10 erstrecken sich jeweils zwischen einem ersten Störkörperende 10a und einem von dem ersten Störkörperende 10a verschiedenen zweiten Störkörperende 10b mit derselben Störkörperlänge. Die aufblasbaren Störkörper 10 sind über entsprechende Verbindungsvorrichtungen 11 miteinander verbunden und zwar an dem ersten Störkörperende 10a des einen aufblasbaren Störkörpers 10 mit dem zweiten Störkörperende 10b des anderen aufblasbaren Störkörpers 10. Die Verbindungsvorrichtungen 11 sind vorzugsweise Verbindungslaschen.

Die aufblasbaren Störkörper 10 sind schlauchförmig ausgebildet. Die aufblasbaren Störkörper 10 umfassen einen Störkörperhohlraum mit einem veränderbaren Störkörperhohlraumvolumen. Die aufblasbaren Störkörper 10 weisen in einem Leerzustand, in dem die aufblasbaren Störkörper nicht mit Luft oder einem anderen Gas(gemisch) aufgeblasen sind, als Störkörperhohlraumvolumen ein Leerzustandsvolumen auf, und in einem aufgeblasenen Zustand, in dem die aufblasbaren Störkörper mit Luft oder einem anderen Gas(gemisch) aufgeblasen sind, als Störkörperhohlraumvolumen ein Füllvolumen auf, welches größer ist als das Leerzustandsvolumen.

Die aufblasbaren Störkörper 10 werden aus einem faserverstärkten Kunststofftextil ausgebildet.

Die aufblasbaren Störkörper weisen Ventile 12 auf, über die den aufblasbaren Störkörpern 10 Luft zugeführt werden kann. Über dieselben andere Öffnungen 13 können die aufblasbaren Störkörper 10 entleert werden

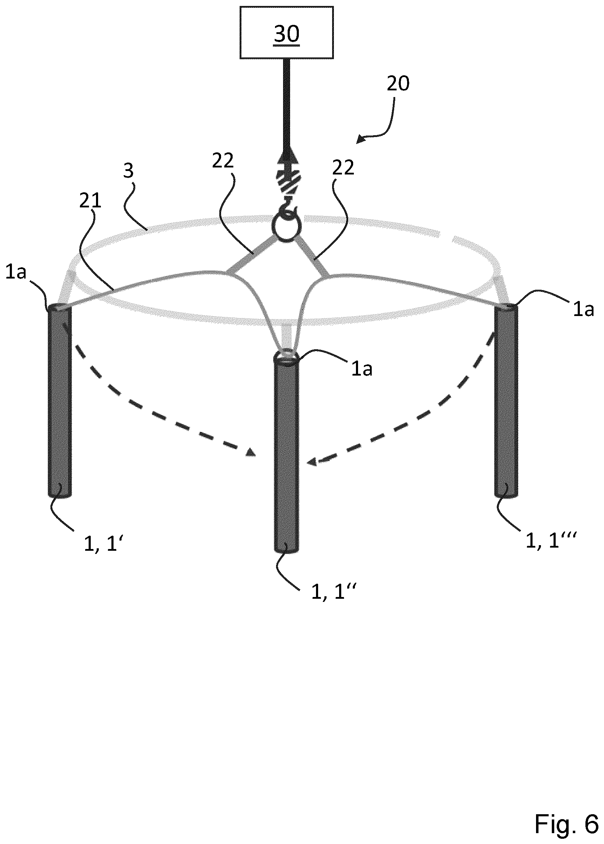

Figur 6 zeigt eine schematische Ansicht eines Ausführungsbeispiels eines Demontagegehänges 20. Das Demontagegehänge 20 weist einen Scruton-Wendel-Verbindungsgurt 21, der über Schäkel (nicht dargestellt) mit den Scruton-Wendeln 1, 1', 1", 1‴, insbesondere mit den oberen Wendelenden 1a der jeweiligen Scruton-Wendel für Demontagezwecke verbunden sein kann. Ferner weist das Demontagegehänge 20 zwei Hebegurte 22 auf, welche jeweils mit dem Scruton-Wendel-Verbindungsgurt 21 verbunden sind. Für die Demontage der Scruton-Wendeln 1, 1', 1", 1‴ kann das Demontagegehänge 20 über die Hebegurte 22 mit einem Kran 30 verbunden werden, wie dies schematisch in Figur 6 dargestellt ist.

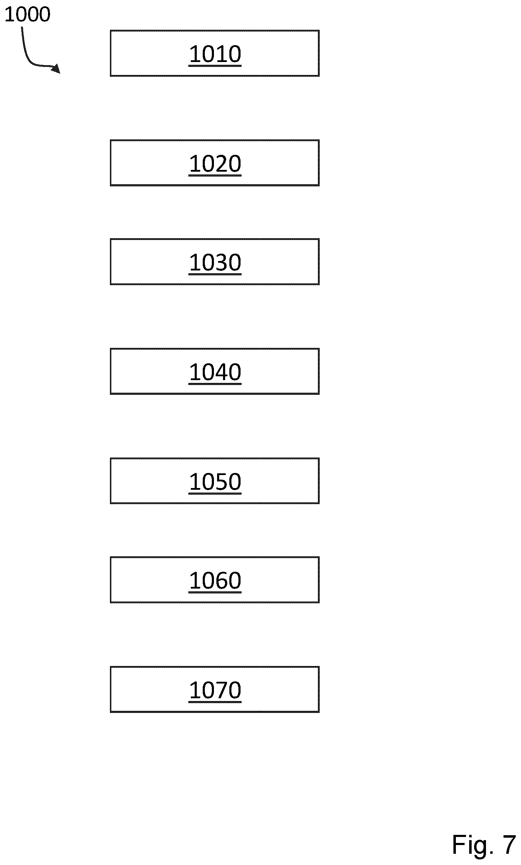

Figur 7 zeigt ein schematisches Blockdiagramm eines Ausführungsbeispiels eines Montageverfahrens 1000. Das Montageverfahren 1000 ist ein Montageverfahren 1000 zur Montage dreier aufblasbarer Scruton-Wendeln 1, 1', 1", 1‴ an einer Turmsektion 2 für einen Turm 102 für eine Windenergieanlage 100. Das Montageergebnis ist schematisch in Figur 3 dargestellt.

Das Verfahren 1000 umfasst ein Befestigen 1010 eines oberen Befestigungsgurtes 3 und ein Befestigen 1020 eines unteren Befestigungsgurtes 4 an der Turmsektion. Die Befestigung des oberen und unteren Befestigungsgurtes erfolgt entsprechend der Windungszahl. Insbesondere sind der obere und untere Befestigungsgurt je nach Windungszahl verdreht zueinander an der Turmsektion zu befestigen. Beispielsweise sind der obere und untere Befestigungsgurt bei einer Windungszahl von 1,5 um 180° verdreht zueinander an der Turmsektion zu befestigen. Das Befestigen 1010 des oberen Befestigungsgurtes 3 erfolgt an dem oberen Turmsektionsende 2a oder im Bereich des oberen Turmsektionsendes 2a, so dass der obere Befestigungsgurt 3 die Turmsektion 2 quer zur Längsachse L in Umfangsrichtung umschließt, wie dies schematisch Figur 3 zeigt. Das Befestigen 1020 des unteren Befestigungsgurtes 4 erfolgt an dem unteren Turmsektionsende 2b oder im Bereich des unteren Turmsektionsendes 2b, so dass der untere Befestigungsgurt 4 die Turmsektion 2 quer zur Längsachse L in Umfangsrichtung umschließt, wie dies schematisch Figur 3 zeigt.

Ferner umfasst das Verfahren 1000 ein Befestigen 1030 der drei aufblasbaren Scruton-Wendeln 1, 1', 1", 1‴ an dem oberen Befestigungsgurt 3 und dem unteren Befestigungsgurt 4, so dass das jeweilige obere Wendelende 1a mit dem oberen Befestigungsgurt 3 verbunden ist und das jeweilige untere Wendelende 1b mit dem unteren Befestigungsgurt 4 verbunden ist, so dass die drei Scruton-Wendeln 1, 1', 1", 1‴ die Turmsektion 2 spiralförmig umschließen, wobei die aufblasbaren Störkörper der mehreren Scruton-Wendeln 1, 1', 1", 1‴ nicht aufgeblasen sind. D.h. die Scruton-Wendeln 1, 1', 1", 1‴ werden an dem oberen Befestigungsgurt 3 und dem unteren Befestigungsgurt 4 befestigt, wenn sie sich im Leerzustand befinden, d.h. in einem Zustand befinden in dem die aufblasbaren Störkörper 10 nicht mit Luft oder einem anderen Gas(gemisch) aufgeblasen sind. In diesem Zustand weisen die aufblasbaren Störkörper 10 als Störkörperhohlraumvolumen ein Leerzustandsvolumen auf.

Nachdem die Scruton-Wendeln 1, 1', 1", 1‴ an dem oberen Befestigungsgurt 3 und dem unteren Befestigungsgurt 4 befestigt sind, folgt in einem nächsten Schritt ein Aufblasen 1040 der aufblasbaren Störkörper 10 der mehreren Scruton-Wendeln 1, 1', 1", 1‴. Sobald die aufblasbaren Störkörper 10 aufgeblasen sind, in dem die aufblasbaren Störkörper mit Luft oder einem anderen Gas(gemisch) aufgeblasen sind, d.h. sich in einem aufgeblasenen Zustand befinden weisen sie als Störkörperhohlraumvolumen ein Füllvolumen auf, welches größer ist als das Leerzustandsvolumen.

Anschließend wird die Turmsektion 2 zusammen mit den daran befestigten Scruton-Wendeln 1, 1', 1", 1‴ aus einer Montageposition angehoben 1050 und in einer Betriebsposition positioniert 1060. In dieser Betriebsposition wird die Turmsektion befestigt 1070, beispielsweise auf einer anderen, bereits montierten Turmsektion.

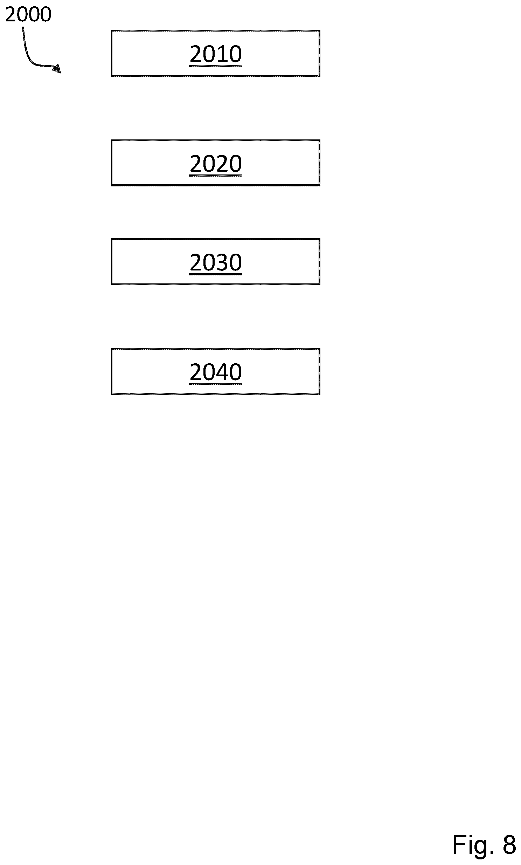

Figur 8 zeigt ein schematisches Blockdiagramm eines Ausführungsbeispiels eines Demontageverfahrens 2000. Das Demontageverfahren 2000 ist ein Demontageverfahren 2000 zur Demontage mehrerer an einer Turmsektion 2 für einen Turm 102 für eine Windenergieanlage 100 spiralförmig angeordneter, aufgeblasener Scruton-Wendeln 1, beispielsweise einer Turmsektion 2 mit drei daran befestigten Scruton-Wendeln, wie dies schematisch in dem in Figur 3 gezeigten Ausführungsbeispiel dargestellt ist.

Das Demontageverfahren umfasst zunächst ein Lösen 2010 der Befestigung der mehreren aufgeblasenen Scruton-Wendeln 1, 1', 1", 1‴ von dem unteren Turmsektionsende 2b oder von der Turmsektion 2 im Bereich des unteren Turmsektionsendes 2b. Dies umfasst ein Lösen des unteren Befestigungsgurtes 4 von dem unteren Turmsektionsende 2b der Turmsektion 2. Hierbei sind die aufblasbaren Störkörper 10 nach wie vor aufgeblasen. Durch das Lösen bewirkt die Spannkraft, mit der die aufblasbaren Störkörper 10 im Zusammenspiel mit dem oberen und unteren Befestigungsgurt 3, 4 an die Turmsektion gespannt werden, ein Abwickeln 2020, insbesondere selbstständiges Abwickeln, der mehreren aufgeblasenen Scruton-Wendeln 1, 1', 1", 1‴ von der Turmsektion 2. Dies hat insbesondere den Vorteil, dass die Scruton-Wendeln nicht mit technischen Hilfsmitteln von der Turmsektion abgewickelt werden müssen. Anschließend, nach dem Abwickeln, folgt ein Lösen 2030 der Befestigung der mehreren Scruton-Wendeln 1, 1', 1", 1‴ von dem oberen Turmsektionsende 2a oder von der Turmsektion 2 im Bereich des oberen Turmsektionsendes 2a. Dies umfasst ein Lösen des oberen Befestigungsgurtes 3 von dem oberen Turmsektionsende 2a der Turmsektion 2. Sobald der obere Befestigungsgurt 3 gelöst wurde, werden die Scruton-Wendeln zu Boden gelassen. Entsprechend werden vor dem Lösen 2030 der Befestigung der drei Scruton-Wendeln 1, 1', 1", 1‴ von dem oberen Turmsektionsende 2a, die Scruton-Wendeln mit einem Kran 30 über ein Demontagegehänge 20 zu Boden ge lassen.

Abschließend werden die aufgeblasenen Störkörper entleert 2040.

### BEZUGSZEICHENLISTE

- 1: Scruton-Wendel
- 1a: oberes Wendelende
- 1b: unteres Wendelende
- 2: Turmsektion
- 2a: oberes Turmsektionsende
- 2b: unteres Turmsektionsende
- 3: oberer Befestigungsgurt
- 4: unterer Befestigungsgurt
- 10: Störkörper
- 11: Verbindungsvorrichtungen
- 12: Ventile
- 13: Öffnungen
- 20: Demontagegehänge
- 21: Scruton-Wendel-Verbindungsgurt
- 22: Hebegurte
- 30: Kran
- 102: Turm
- 100: Windenergieanlage
- L: Längsachse

## Patentansprüche

1. Montageverfahren (1000) zur Montage mehrerer aufblasbarer Scruton-Wendeln (1, 1', 1", 1‴) an einer Turmsektion (2) für einen Turm (102), insbesondere an einer Turmsektion (2) für einen Turm (102) für eine Windenergieanlage (100),
wobei sich die Turmsektion (2) entlang einer Längsachse (L) zwischen einem oberen Turmsektionsende (2a) und einem von dem oberen Turmsektionsende (2a) verschiedenen unteren Turmsektionsende (2b) erstreckt, und
die mehreren Scruton-Wendeln (1, 1', 1", 1‴) sich jeweils zwischen einem oberen Wendelende (1a) und einem unteren Wendelende (1b) erstrecken und jeweils mehrere miteinander verbundene oder verbindbare, aufblasbare Störkörper (10) aufweisen,
das Verfahren umfassend die Schritte:
- Befestigen (1010) eines oberen Befestigungsgurtes (3) an dem oberen Turmsektionsende (2a) oder im Bereich des oberen Turmsektionsendes (2a), so dass der obere Befestigungsgurt (3) die Turmsektion (2) quer zur Längsachse (L) in Umfangsrichtung umschließt,
- Befestigen (1020) eines unteren Befestigungsgurtes (4) an dem unteren Turmsektionsende (2b) oder im Bereich des unteren Turmsektionsendes (2b), so dass der untere Befestigungsgurt (4) die Turmsektion (2) quer zur Längsachse (L) in Umfangsrichtung umschließt,
- Befestigen (1030) der mehreren aufblasbaren Scruton-Wendeln (1, 1', 1", 1‴) an dem oberen Befestigungsgurt (3) und dem unteren Befestigungsgurt (4), so dass das jeweilige obere Wendelende (1a) mit dem oberen Befestigungsgurt (3) verbunden ist und das jeweilige untere Wendelende (1b) mit dem unteren Befestigungsgurt (4) verbunden ist, so dass die mehreren Scruton-Wendeln (1, 1', 1", 1‴) die Turmsektion (2) spiralförmig umschließen, wobei die aufblasbaren Störkörper der mehreren Scruton-Wendeln (1, 1', 1", 1‴) nicht aufgeblasen sind.

2. Montageverfahren (1000) nach dem vorhergehenden Anspruch 1, umfassend die Schritte:
- Aufblasen (1040) der aufblasbaren Störkörper der mehreren Scruton-Wendeln (1, 1', 1", 1‴), und/oder
- Anheben (1050) der Turmsektion (2) aus einer Montageposition und Positionieren (1060) der Turmsektion (2) in einer Betriebsposition.

3. Montageverfahren (1000) nach einem der vorhergehenden Ansprüche 1 oder 2, umfassend
- Befestigen (1070) der Turmsektion (2) in der Betriebsposition.

4. Montageverfahren (1000) nach einem der vorhergehenden Ansprüche 1 bis 3, umfassend
- Verbinden eines Demontagegehänges (20) mit den mehreren Scruton-Wendeln (1, 1', 1", 1‴), insbesondere mit dem jeweiligen oberen Wendelende (1a) der mehreren Scruton-Wendeln.

5. Demontageverfahren (2000) zur Demontage mehrerer an einer Turmsektion (2) für einen Turm (102), insbesondere an einer Turmsektion (2) für einen Turm (102) für eine Windenergieanlage (100) spiralförmig angeordneter, aufgeblasener Scruton-Wendeln,
wobei sich die Turmsektion (2) entlang einer Längsachse (L) zwischen einem oberen Turmsektionsende (2a) und einem von dem oberen Turmsektionsende (2a) verschiedenen unteren Turmsektionsende (2b) erstreckt und an dem oberen Turmsektionsende (2a) oder im Bereich des oberen Turmsektionsendes ein oberer Befestigungsgurt (3) angeordnet ist, der die Turmsektion (2) quer zur Längsachse (L) in Umfangsrichtung umschließt, und an dem unteren Turmsektionsende (2b) oder im Bereich des unteren Turmsektionsendes ein unterer Befestigungsgurt (4) angeordnet ist, der die Turmsektion (2) quer zur Längsachse (L) in Umfangsrichtung umschließt,
wobei die mehreren Scruton-Wendeln (1, 1', 1", 1‴) sich jeweils zwischen einem oberen Wendelende (1a) und einem unteren Wendelende (1b) erstrecken und jeweils mehrere miteinander verbundene oder verbindbare, aufblasbare Störkörper (10) aufweisen,
wobei die mehreren Scruton-Wendeln (1, 1', 1", 1‴) an dem oberen Befestigungsgurt (3) jeweils mit dem oberen Wendelende (1a) verbunden sind und an dem unteren Befestigungsgurt (4) jeweils mit dem unteren Wendelende (1b) verbunden sind, wobei der obere Befestigungsgurt (3) die Scruton-Wendeln (1, 1', 1", 1‴) an dem oberen Turmsektionsende (2a) oder im Bereich des oberen Turmsektionsendes (2a) befestigt und der untere Befestigungsgurt (4) die Scruton-Wendeln (1, 1', 1", 1‴) an dem unteren Turmsektionsende (2b) oder im Bereich des unteren Turmsektionsendes (2b) befestigt,
das Verfahren umfassend die Schritte:
- ein Lösen (2010) der Befestigung der mehreren aufgeblasenen Scruton-Wendeln (1, 1', 1", 1‴) von dem unteren Turmsektionsende (2b) oder von der Turmsektion (2) im Bereich des unteren Turmsektionsendes (2b),
- ein Abwickeln (2020), insbesondere selbstständiges Abwickeln, der mehreren aufgeblasenen Scruton-Wendeln (1, 1', 1", 1‴) von der Turmsektion (2), und
- nach dem Abwickeln ein Lösen (2030) der Befestigung der mehreren Scruton-Wendeln (1, 1', 1", 1‴) von dem oberen Turmsektionsende (2a) oder von der Turmsektion (2) im Bereich des oberen Turmsektionsendes (2a).

6. Demontageverfahren (2000) nach dem vorhergehenden Anspruch 5,
- wobei der Schritt des Lösens (2010) der Befestigung der mehreren Scruton-Wendeln (1, 1', 1", 1‴) von dem unteren Turmsektionsende (2b) umfasst:
o Lösen des unteren Befestigungsgurtes (4) von dem unteren Turmsektionsende (2b) der Turmsektion (2); und/oder
- wobei der Schritt des Lösens (2030) der Befestigung der mehreren Scruton-Wendeln (1, 1', 1", 1‴) von dem oberen Turmsektionsende (2a) umfasst:
o Lösen des oberen Befestigungsgurtes (3) von dem oberen Turmsektionsende (2a) der Turmsektion (2).

7. Demontageverfahren (2000) nach einem der vorhergehenden Ansprüche 5 oder 6, umfassend den Schritt:
- Entleeren (2040) der aufgeblasenen Störkörper der mehreren Scruton-Wendeln.

8. Aufblasbare Scruton-Wendel zur spiralförmigen Montage an einer Turmsektion (2) für einen Turm (102), insbesondere an einer Turmsektion (2) für einen Turm (102) für eine Windenergieanlage (100), umfassend:
- mehrere miteinander verbundene, aufblasbare Störkörper (10).

9. Scruton-Wendelvorrichtung, umfassend mehrere aufblasbare Scruton-Wendeln (1, 1', 1", 1‴) nach dem vorhergehenden Anspruch 8.

10. Turmsektion (2) für einen Turm (102), insbesondere für einen Turm (102) für eine Windenergieanlage (100), die sich entlang einer Längsachse (L) zwischen einem oberen Turmsektionsende (2a) und einem von dem oberen Turmsektionsende (2a) verschiedenen unteren Turmsektionsende (2b) erstreckt, umfassend mindestens eine Scruton-Wendel nach dem vorhergehenden Anspruch 8, die sich zwischen einem oberen Wendelende (1a) und einem unteren Wendelende (1b) spiralförmig zwischen dem oberen Turmsektionsende (2a) und dem unteren Turmsektionsende (2b) erstreckt.

11. Turmsektion (2) nach dem vorhergehenden Anspruch 10, wobei die mindestens eine Scruton-Wendel
- mit dem oberen Wendelende (1a) an dem oberen Turmsektionsende (2a) oder im Bereich des oberen Turmsektionsendes mit der Turmsektion (2) verbunden ist, und/oder
- mit dem unteren Wendelende (1b) an dem unteren Turmsektionsende (2b) oder im Bereich des unteren Turmsektionsendes mit der Turmsektion (2) verbunden ist.

12. Turmsektion (2) nach einem der vorhergehenden Ansprüche 10 oder 11, umfassend
- an dem oberen Turmsektionsende (2a) oder im Bereich des oberen Turmsektionsendes einen oberen Befestigungsgurt (3), der die Turmsektion (2) quer zur Längsachse (L) in Umfangsrichtung umschließt, an dem die mindestens eine Scruton-Wendel mit dem oberen Wendelende (1a) verbunden ist, und/oder
- an dem unteren Turmsektionsende (2b) oder im Bereich des unteren Turmsektionsendes einen unteren Befestigungsgurt (4), der die Turmsektion (2) quer zur Längsachse (L) in Umfangsrichtung umschließt, an dem die mindestens eine Scruton-Wendel mit dem unteren Wendelende verbunden ist.

13. Turmsektion (2) nach einem der vorhergehenden Ansprüche 10 bis 12, wobei die aufblasbaren Störkörper (10) aufgeblasen sind.

14. Turm (102), insbesondere Turm (102) für eine Windenergieanlage (100), umfassend eine Turmsektion (2) nach einem der vorhergehenden Ansprüche 10 bis 13.

15. Windenergieanlage (100) umfassend eine Turmsektion (2) nach einem der vorhergehenden Ansprüche 10 bis 13, und/oder einen Turm (102) nach dem vorhergehenden Anspruch 14.
